(19) Europäisches Patentamt
European Patent Office
Office européen des brevets

(11) EP 1 412 412 B1

(12) # EUROPÄISCHE PATENTSCHRIFT

(45) Veröffentlichungstag und Bekanntmachung des Hinweises auf die Patenterteilung:
**21.02.2007 Patentblatt 2007/08**

(21) Anmeldenummer: **02704749.7**

(22) Anmeldetag: **13.03.2002**

(51) Int Cl.:
***C08G 64/30*** *(2006.01)*

(86) Internationale Anmeldenummer:
**PCT/EP2002/002720**

(87) Internationale Veröffentlichungsnummer:
**WO 2002/077101 (03.10.2002 Gazette 2002/40)**

(54) **SCHMELZEPOLYCARBONAT MIT VERBESSERTER HYDROLYSEBESTÄNDIGKEIT**

MELT POLYCARBONATE EXHIBITING AN IMPROVED RESISTANCE TO HYDROLYSIS

POLYCARBONATE EN FUSION A RESISTANCE AMELIOREE A L'HYDROLYSE

(84) Benannte Vertragsstaaten:
**AT BE CH CY DE DK ES FI FR GB GR IE IT LI LU MC NL PT SE TR**

(30) Priorität: **26.03.2001 DE 10114807**
**10.05.2001 DE 10122495**

(43) Veröffentlichungstag der Anmeldung:
**28.04.2004 Patentblatt 2004/18**

(73) Patentinhaber: **Bayer MaterialScience AG**
**51368 Leverkusen (DE)**

(72) Erfinder:
- **MASON, James**
  **Carnegie, PA 15106 (US)**
- **EBERT, Wolfgang**
  **47800 Krefeld (DE)**

(56) Entgegenhaltungen:
**EP-A- 0 885 912**
**WO-A-99/07778**
**WO-A-99/63002**
**DE-A- 10 122 493**
**DE-A- 10 122 496**
**US-A- 6 107 375**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 412 412 B1

Printed by Jouve, 75001 PARIS (FR)

## Beschreibung

Die Erfindung betrifft Schmelzepolycarbonate mit verbesserter Hydrolysebeständigkeit, diese enthaltende Zusammensetzungen und Formkörper mit verbesserter Hydrolysebeständigkeit.

Polycarbonat wird industriell mit Hilfe des Grenzflächenverfahren oder durch Umesterung in der Schmelze (Schmelzpolymerisationsverfahren) erzeugt. Das Schmelzpolymerisationsverfahren wird immer interessanter, da es ohne den Einsatz von Phosgen oder chlorierten Lösungsmitteln durchführbar ist. Das Grenzflächenverfahren ergibt ein Polycarbonat mit ausgezeichneter Farbe und Hydrolysebeständigkeit. Es ist bekannt, Additive auf Phosphorbasis dem Polycarbonat zuzusetzen, um dessen Farbe weiter zu verbessern. Durch die Zugabe dieser Phosphorverbindungen wird jedoch die Hydrolysebeständigkeit des nach dem Grenzflächenverfahren erzeugten Polycarbonats gesenkt. Um einen Teil der verlorenen Hydrolysebeständigkeit zurückzugewinnen, ist es üblich, eine Epoxidverbindung zuzusetzen. Die Kombination von Epoxid- und Phosphorverbindungen ergibt jedoch keine bessere Hydrolysebeständigkeit des Polycarbonats als ohne Zusatz beider Substanzen. Der Zusatz des Epoxids kann die durch die Phosphorverbindung hervorgerufene Verschlechterung der Hydrolysebeständigkeit allenfalls ausgleichen.

Überraschend wurde festgestellt, dass die Hydrolysebeständigkeit eines durch Schmelzpolymerisation erzeugten Polycarbonats durch den Zusatz von Phosphorverbindungen verbessert wird. Diese Wirkung tritt auch ohne den Zusatz der Hydrolysestabilisatoren auf Expoxidbasis ein.

Gegenstand der Erfindung sind also durch Schmelzpolymerisation erhaltene Polycarbonate, Copolycarbonate und/oder Polycarbonatester, die eine organische Phosphorverbindung enthalten. Gegenstand der Erfindung sind ferner Zusammensetzungen, die eines oder mehrere der zuvor genannten Polymere enthalten. Gegenstand der Erfindung ist schließlich die Verwendung organischer Phosphorverbindungen zur Verbesserung der Hydrolysestabilität der erfindungsgemäßen Schmelzepolycarbonaten.

Erfindungsgemäß geeignete organische Phosphorverbindungen sind beispielsweise Phosphine, Phosphinoxide, Phosphinite, Phosphonite, Phosphite, Diphosphine, Diphosphinite, Diphosphonite, Diphosphite, Phosphinate, Phosphonate, Phosphate, Diphosphinate, Diphosphonate und Diphosphatverbindungen sowie die oligomeren Derivate der zuvor genannten Phosphorverbindungen.

Erfindungsgemäß geeignete Phosphin- ($PR_3$) und Phosphinoxidverbindungen ($OPR_3$) sind beispielsweise solche, bei denen R Wasserstoff, ein $C_1$ bis $C_{100}$-Alkylrest oder ein nicht substituierter oder substituierter $C_6$ bis $C_{14}$-Arylrest ist. Der Rest R kann gleich oder verschieden sein. Die am meisten bevorzugten Reste R sind Phenyl, 2-tert.-Butylphenyl, 2,4-Di-tert.-butylphenyl, 2,6-Di-tert.-butylphenyl, 2,4,6-Tri-tert.-butylphenyl, p-Nonylphenyl und Naphthylen. Ein besonders bevorzugtes Phosphin ist Triphenylphosphin.

Erfindungsgemäß geeignete Phosphinit- ($P(OR)R_2$), Phosphonit- ($P(OR)_2R$) und Phosphitverbindungen ($P(OR)_3$) sind beispielsweise solche, bei denen R Wasserstoff, ein $C_1$ bis $C_{100}$-Alkylrest, oder ein nicht substituierter oder substituierter $C_6$ bis $C_{14}$-Arylrest ist. Der Rest R kann gleich oder verschieden sein. Die am meisten bevorzugten Reste R sind Phenyl, 2-tert.-Butylphenyl, 2,4-Di-tert.-butylphenyl, 2,6-Di-tert.-butylphenyl, 2,4,6-Tri-tert.-butylphenyl, p-Nonylphenyl und $CH_3$ bis $C_{18}H_{37}$.

Erfindungsgemäß geeignete Phosphinat- ($PO(OR)R_2$), Phosphonat- ($PO(OR)_2R$) und Phosphatverbindungen ($PO(OR)_3$) sind beispielsweise solche, bei denen R Wasserstoff, ein $C_1$ bis $C_{100}$-Alkylrest oder ein nicht substituierter oder substituierter $C_6$ bis $C_{14}$-Arylrest ist. Der Rest R kann gleich oder verschieden sein. Die am meisten bevorzugten Reste R sind Phenyl, 2-tert.-Butylphenyl, 2,4-Di-tert.-butylphenyl, 2,6-Di-tert.-butylphenyl, 2,4,6-Tri-tert.-butylphenyl, p-Nonylphenyl und $CH_3$ bis $C_{18}H_{37}$.

Erfindungsgemäß geeignete Diphosphinverbindungen $R_2P\text{-}X\text{-}PR_2$ sind beispielsweise solche, bei denen R Wasserstoff, ein $C_1$ bis $C_{100}$-Alkylrest oder ein nicht substituierter oder substituierter $C_6$ bis $C_{14}$-Arylrest ist, wie solche, die der nachfolgenden Formel (2) entsprechen. Der Rest R kann gleich oder verschieden sein. Weitere geeignete Verbindungen sind solche, bei denen X eine zweiwertige $C_1$ bis $C_{100}$-Alkyl- oder eine nicht substituierte oder substituierte $C_6$ bis $C_{14}$-Arylverbindung ist. Bevorzugte zweiwertige Reste sind Phenylen, Biphenylen, 2,2-Diphenylpropan und Naphthylen.

Erfindungsgemäß geeignete Diphosphinit- ((RO)RP-X-PR(OR)), Diphosphonit-($(RO)_2P\text{-}X\text{-}P(OR)_2$) und Diphosphitverbindungen ($(RO)_2P\text{-}OXO\text{-}P(OR)_2$) sind beispielsweise solche, bei denen R ein $C_1$ bis $C_{100}$-Alkylrest oder ein nicht substituierter oder substituierter $C_6$ bis $C_{14}$-Arylrests ist. Der Rest R kann gleich oder verschieden sein. Geeignet sind ebenfalls Verbindungen, bei denen X eine zweiwertige $C_1$ bis $C_{100}$-Alkyl- oder eine nicht substituierte oder substituierte $C_6$ bis $C_{14}$-Arylverbindung ist. Besonders bevorzugte zweiwertige Verbindungen sind Phenylen, Biphenylen und Naphthylen.

Insbesondere kann X = eine Verbindung der Formel (2)

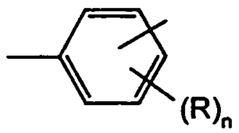

(2)

oder der Formel (3)

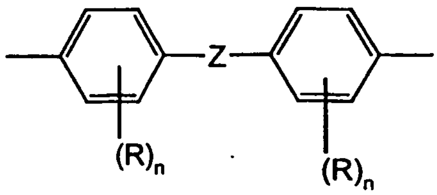

(3)

sein, in welcher

R ein substituiertes oder unsubstituiertes Phenyl, Methyl, Propyl, Ethyl, Butyl, Cl oder Br ist und n für 0, 1 oder 2 steht,

und Z für $C_1$ bis $C_8$-Alkyliden oder $C_5$ bis $C_{12}$-Cycloalkyliden, S, $SO_2$ oder eine Einfachbindung steht.

Weitere erfindungsgemäß geeignete Diphosphite sind solche der Formel

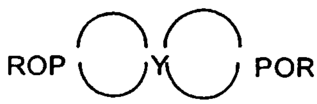

worin R ein $C_1$ bis $C_{100}$-Alkylrest oder ein nicht substituierter oder substituierter $C_6$ bis $C_{14}$-Arylrest ist. Y ein vierwertiger $C_1$ bis $C_{100}$-Alkoxyrest ist. Die am meisten bevorzugte vierwertige Verbindung ist Pentaerythrit.

Am meisten bevorzugte Phosphite sind Triphenylphosphit, Tris(2-tert.-butylphenyl)-phosphit, Tris(2,4-di-tert.-butylphenyl)phosphit, Tris(2,6-di-tert.-butylphenyl)phosphit (Irganox 168 ®:

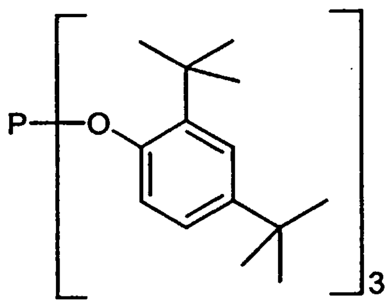

),

Tris(2,4,6-tri-tert.-butylphenyl)phosphit, (2,4,6-Tri-tert.-butyl-phenyl)-(2-butyl-2-ethyl-propan-1,3-diyl)phosphit (Ultranox 641®:

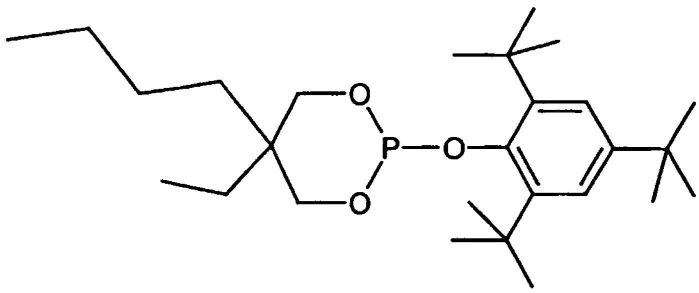

),

Bis(2,4-di-cumyl-phenyl)-pentaerythritdiphosphit, Bis-(2,4-di-tert.-butylphenyl)-pentaerythritdiphosphit, Distearylpentaerythritdiphosphit, Tris(p-nonylphenyl)phosphit, Diphenylisodecyl-phosphit, Diisodecylphenylphosphit, Triisodecylphosphit, Trilaurylphosphit und Tris[(3-ethyloxethanyl-3)methyl]phosphit. Das am meisten bevorzugte Phosphin ist Triphenylphosphin. Das am meisten bevorzugte Phosphonit ist Tetrakis(2,4-di-tert.-butylphenyl)[1,1-biphenyl]-4,4'-diylbisphosphonit.

Die am meisten bevorzugten Phosphate sind Tris(2-ethylhexyl)phosphat, Triphenylphosphat, Tris(2-tert.-butylphenyl)phosphat, Tris(2,4-di-tert.-butylphenyl)phosphat, Tris(2,6-di-tert.-butylphenyl)phosphat und Tris(2,4,6-tritert.-butylphenyl)phosphat.

Diese Phosphorverbindungen sind im Handel erhältlich und können unterschiedliche Mengen an Verunreinigungen enthalten. Vorzugsweise werden nur Verbindungen mit hoher Reinheit und nur geringfügigen Mengen an Säuregruppen, Aminverbindungen und Restsalzen wie Alkali- und Erdalkalimetallsalzen verwendet.

Die Phosphorverbindungen können auch in Gemischen von mehr als einer Phosphorverbindung verwendet werden, um die Eigenschaften der Polycarbonatzusammensetzung zu optimieren. Diese Phosphorverbindungen sind auch als Gemische mit weiteren Stabilisatoren und Additiven wie UV-Absorbem, Entformungsmitteln, Glas weiteren Polymeren, gehinderten Phenolen und Lactonen im Handel erhältlich.

Es wird angenommen, dass die erfindungsgemäß einzusetzenden Phosphorverbindungen mit den Polycarbonaten/Polyestercarbonaten im physikalischen Gemisch vorliegen. Die Phosphorverbindungen zeigen die erfindungsgemäßen Wirkungen in Mengen von 10 ppm bis 30 %, bezogen auf die Menge des Schmelzepolycarbonats. Vorzugsweise werden die Phosphorverbindungen in Mengen von 10 ppm bis etwa 1 Gew.-%, bezogen auf die Masse des Polycarbonats eingesetzt werden, um die erfindungsgemäß gewünschte Wirkung zu erzielen.

Die erfindungsgemäß zuzusetzende Phosphorverbindung kann vor der Schmelzpolymerisation dem Monomeren oder der Katalysatorlösung zugesetzt werden. Die Phosphorverbindung kann auch während des Schmelzpolymerisationsvorgangs hinzugefügt oder am Ende der Schmelzpolymerisation direkt zum Schmelzstrom gegeben werden. Schließlich kann die Phosphorverbindung in einem weiteren Schritt, beispielsweise durch Compoundieren, mit dem Polycarbonat/Polyestercarbonat vermischt werden.

Die Wirkung der erfindungsgemäß einzusetzenden Phosphorverbindungen entfaltet sich in Schmelzepolycarbonaten der allgemeinen Formel (1)

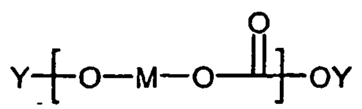

(1)

wobei die eckige Klammer sich wiederholende Struktureinheiten bezeichnet,

M Ar oder eine multifunktionelle Verbindung A, B, C sowie Verbindung D ist,

wobei Ar eine Verbindung sein kann, die durch Formel (2) dargestellt wird,

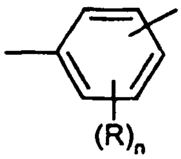

(2)

oder besonders bevorzugt eine Verbindung, die durch Formel (3) dargestellt wird,

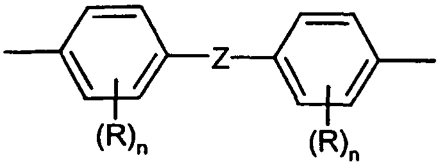

(3)

wobei

Z $C_1$ bis $C_8$-Alkyliden oder $C_5$ bis $C_{12}$-Cycloalkyliden, S, $SO_2$ oder eine Einfachbindung,

R ein substituiertes oder unsubstituiertes Phenyl, Methyl, Propyl, Ethyl, Butyl, Cl oder Br ist und n für 0, 1 oder 2 steht,

wobei die multifunktionelle Verbindung A eine Verbindung der Formel

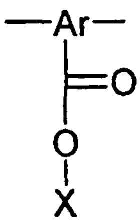

(A)

ist,
wobei die multifunktionelle Verbindung B eine Verbindung der Formel

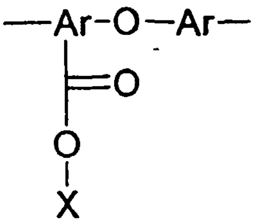

(B)

ist,
wobei die multifunktionelle Verbindung C eine Verbindung der Formel

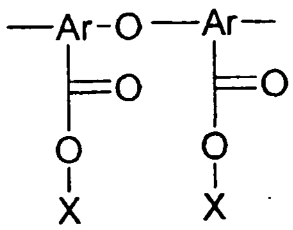

(C)

ist,
wobei Verbindung D eine Verbindung der Formel

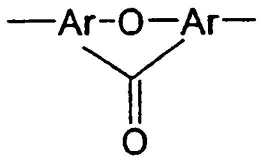

(D)

ist, und die Summe von multifunktionellen Verbindungen A, B, C und D > 5ppm ist, wobei Y = H oder eine Verbindung der Formel (4)

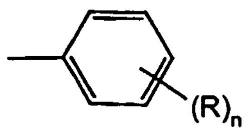

(4)

ist, wobei

R H, $C_1$ bis $C_{20}$-Alkyl, $C_6H_5$ oder $C(CH_3)_2C_6H_5$, gleich oder verschieden und

n 0, 1, 2 oder 3 sein kann,

wobei X = Y oder -(MOCOO)Y ist,
wobei

M und Y die oben angegebene Bedeutung haben.

Besonders bevorzugt sind dabei Polycarbonate mit einem Scherentzähungsverhältnis (y), das durch die Grenzwerte der folgenden Gleichung definiert ist

$$(Q) \qquad c + ax^b > y > -c+ax^b$$

- für alle $y \geq 1$,
- wobei a, b und c Konstanten sind und
- c = 0,3 bis 0,1, vorzugsweise 0,2 bis 0,1 und in am meisten bevorzugter Weise etwa 0,1,
- b = 14,831 $\pm$ 0,05 bis 0,02, vorzugsweise $\pm$0,04 bis 0,02 und in am meisten bevorzugter Weise $\pm$ etwa 0,02 und
- a = 0,1262 $\pm$ 0,005 bis 0,003, vorzugsweise $\pm$ 0,004 bis 0,003 und in am meisten bevorzugter Weise $\pm$ etwa 0,003 beträgt und

x die relative Viskosität des Polycarbonats ist. Solche besonders bevorzugten Polycarbonate und deren Herstellung sind in der parallel eingereichten Anmeldung mit dem internen Aktenzeichen LeA 34 498 beschrieben.

Das erfindungsgemäße Polycarbonat kann ein durch Gelpermeationschromatographie bestimmtes Gewichtsmittel des Molekulargewichts von 5.000 bis 80.000, vorzugsweise 10.000 bis 60.000 und in am meisten bevorzugter Weise 15.000 bis 40.000 aufweisen.

Vorzugsweise hat Ar die folgende Bedeutung:

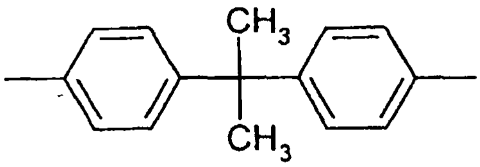

(2.1)

Vorzugsweise ist die multifunktionelle Verbindung A die Verbindung A1:

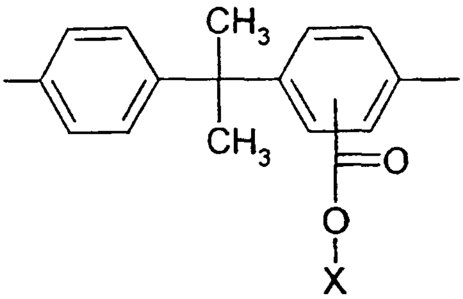

(A1)

Vorzugsweise ist die Verbindung B die Verbindung B1:

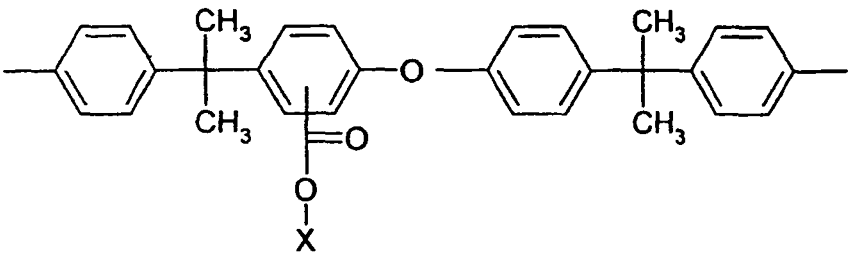

(B1)

Vorzugsweise ist die multifunktionelle Verbindung C die Verbindung C1:

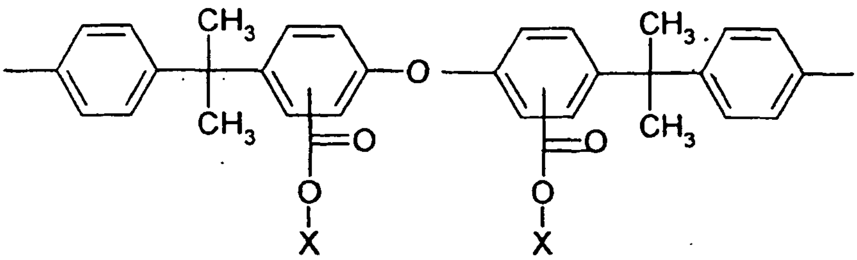

(C1)

In den Verbindungen B1 und C1 hat X die oben angegebene Bedeutung. Vorzugsweise ist die Verbindung D die Verbindung D1:

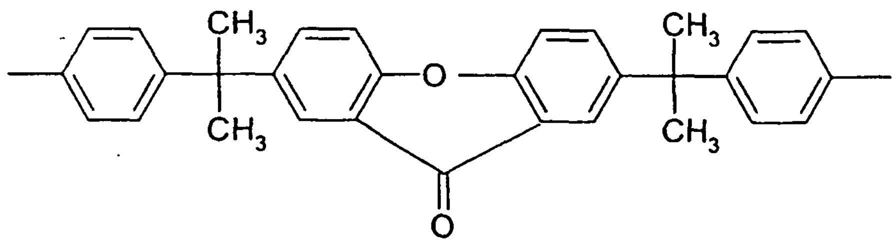

(D1)

Die zuvor beschriebenen Schmelzepolycarbonate sind nur beispielhaft genannt. Die Anteile der Komponenten A bis D können auch in größeren oder kleineren Anteilen in dem Schmelzepolycarbonat enthalten sein.

Die Herstellung aromatischer Polycarbonate nach dem Schmelzumesterungsverfahren ist bekannt und beispielsweise beschrieben in "Schnell", Chemistry and Physics of Polycarbonats, Polymer Reviews, Vol.9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymere Science and Engineering, Vol. 11, Second Edition, 1988, Seiten 648-718 und schließlich auf Des. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Das erfindungsgemäß mit einer Phosphorverbindung einzusetzende Polycarbonat/Polyestercarbonat wird durch die Schmelzumesterungsreaktion geeigneter Diphenole und Kohlensäurediarylester in Gegenwart eines geeigneten Katalysators hergestellt. Das Polycarbonat kann auch durch die Kondensation von Carbonatoligomeren, die Hydroxy- oder Carbonatendgruppen enthalten, und geeigneten Diphenolen sowie Kohlensäurediarylestern hergestellt werden.

Geeignete Kohlensäurediarylester im Zusammenhang mit der Erfindung sind Di-$C_6$ bis $C_{14}$-arylester, vorzugsweise die Diester von Phenol oder von alkylsubstituierten Phenolen, d.h. Diphenylcarbonat, Dikresylcarbonat und Di-4-tert.-butylphenylcarbonat. Am meisten bevorzugt ist Diphenylcarbonat.

Geeignete Carbonatoligomere werden durch die obige Formel (1) mit Molekulargewichten von 153 bis 15.000 beschrieben.

Zu den geeigneten Di-$C_6$-$C_{14}$-arylestern gehören auch unsymmetrische Diarylester, die ein Gemisch von Arylsubstituenten enthalten. Am meisten bevorzugt sind Phenylkresylcarbonat und 4-tert.-Butylphenylphenylcarbonat.

Zu den geeigneten Diarylestem gehören auch Gemische von mehr als einem Di-$C_6$-$C_{14}$-arylester. Am meisten bevorzugte Gemische sind Gemische von Diphenylcarbonat, Dikresylcarbonat und Di-4-tert.-butylphenylcarbonat.

Bezogen auf 1 Mol Diphenol, können die Kohlensäurediarylester in Mengen von 1,00 bis 1,30 Mol, besonders bevorzugt in Mengen von 1,02 bis 1,20 Mol und am meisten bevorzugt in Mengen von 1,05 bis 1,15 Mol verwendet werden.

Geeignete Dihydroxybenzolverbindungen im Zusammenhang mit der Erfindung sind solche, die der Formel (5) entsprechen:

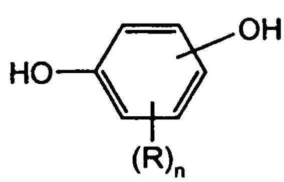

(5)

worin

R ein substituiertes oder unsubstituiertes Phenyl, Methyl, Propyl, Ethyl, Butyl, Cl oder Br ist und

n für 0, 1 oder 2 steht.

Am meisten bevorzugte Dihydroxybenzolverbindungen sind 1,3-Dihydroxybenzol, 1,4-Dihydroxybenzol und 1,2-Dihydroxybenzol.

Geeignete Diphenole im Zusammenhang mit der Erfindung sind solche, die der Formel (6) entsprechen:

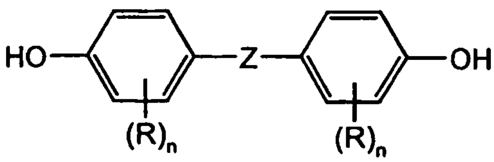

(6)

wobei

Z $C_1$ bis $C_8$-Alkyliden oder $C_5$ bis $C_{12}$-Cycloalkyliden, S, $SO_2$ oder eine Einfachbindung,

R ein substituiertes oder unsubstituiertes Phenyl, Methyl, Propyl, Ethyl, Butyl, Cl oder Br ist und

n für 0, 1 oder 2 steht.

Bevorzugte Diphenole sind 4,4'-Dihydroxydiphenyl, 4,4'-Dihydroxydiphenylsulfid, 1,1-Bis(4-hydroxphenyl)cyclo-hexan, 1,2-Bis(4-hydroxyphenyl)benzol, 1,3-Bis(4-hydroxyphenyl)benzol, 1,4-Bis(4-hydroxyphenyl)benzol, Bis(4-hydroxyphenyl)methan, 2,2-Bis(4-hydroxyphenyl) propan, 2,4-Bis(4-hydroxyphenyl)-2-methylbutan, 2,2-Bis(3-methyl-4-hydroxy-phenyl)-propan, 2,2-Bis(3-chlor-4-hydroxyphenyl)propan, Bis(3,5-dimethyl-4-hydroxy-phenyl)methan, 2,2-Bis(3,5-dimethyl-4-hydroxyphenyl)propan, Bis(3,5-dimethyl-4-hydroxyphenyl)sulfon, Bis(4hydroxyphenyl)sulfon, 1,2-Bis[2-(4-hydroxy-phenyl)isopropyl]benzol, 1,3-Bis[2-(4-hydroxyphenyl)isopropyl]benzol, 1,4-Bis[2-(4-hydroxyphenyl) isopropyl]benzol, 1,1-Bis(4-hydroxyphenyl)-1-phenylethan, 2,4-Bis(4-hydroxyphenyl)-2-methylbutan, 2,2-Bis-(3,5-dichlor-4-hydroxyphenyl)-propan, 2,2-Bis(3,5-dibrom-4-hydroxyphenyl)propan, 1,1-Bis(4-hydroxyphenyl)-3,3,5-trimethylcyclohexan.

Die am meisten bevorzugten Diphenole sind 1,1-Bis(4-hydroxyphenyl)-1-phenylethan, 2,2-Bis(4-hydroxyphenyl)propan, 4,4'-Dihydroxydiphenyl, 1,1-Bis(4-hydroxyphenyl)-3,3,5-trimethylcyclohexan, 2,2-Bis(3,5-dibrom-4-hydroxyphenyl)propan und 1,3-Bis[2-(4-hydroxyphenyl)isopropyl]benzol.

Zu den geeigneten Diphenolen gehören auch Gemische von mehr als einem Diphenol; dabei würde ein Copolycarbonat entstehen. Die am meisten bevorzugten Mischpartner sind 1,3-Bis[2-(4-hydroxyphenyl)isopropyl]benzol, 1,1-Bis(4-hydroxyphenyl)-3,3,5-trimethylcyclohexdan, 2,2-Bis(4-hydroxyphenyl)propan, 4,4'-Dihydroxydiphenyl und 2,2-Bis(3,5-dibrom-4-hydroxyphenyl)propan.

Zusätzlich kann ein Verzweigungsmittel hinzugefügt werden, wie z.B. Verbindungen, die drei funktionelle phenolische OH-Gruppen enthalten. Dies würde das Polymer offensichtlich verzweigen und würde das nicht-Newtonsche Fließverhalten erhöhen. Zu den geeigneten Verzweigungsmitteln gehören Phloroglucin, 3,3-Bis(3-methyl-4-hydroxyphenyl)-2-oxo-2,3-dihydroindol, 4,6-Dimethyl-2,4,6-tris(4-hydroxyphenyl)hepten-2, 4,6-Dimethyl-2,4,6-tris(4-hydroxyphenyl)-heptan, 1,3,5-Tris-(4-hydroxyphenyl)benzol, 1,1,1 -Tris(4-hydroxyphenyl)ethan, Tris(4-hydroxyphenyl)phenylmethan, 2,2-Bis[4,4-bis(4-hydroxyphenyl)cyclohexyl]propan, 2,4-Bis-(4-hydroxyphenylisopropyl)phenol, 2,6-Bis(2-hydroxy-5'-methylbenzyl)-4-methylphenol, 2-(4-hydroxyphenyl)-2-(2,4-dihydroxyphenyl)propan, Hexakis(4-(4-hydroxyphenylisopropyl)phenyl)orthoterephthalat, Tetrakis(4-hydroxyphenyl)methan, Tetrakis(4-(4-hydroxyphenylisopropyl) phenoxy)methan, 1,4-Bis((4',4"-dihydroxytriphenyl)methyl)benzol und Isatinbiskresol, Pentaerythrit, 2,4-Dihydroxybenzoesäure, Trimesinsäure, Cyanursäure.

Zur Herstellung der erfindungsgemäßen Polycarbonate geeignete Katalysatoren sind beispielsweise solche der allgemeinen Formel (7)

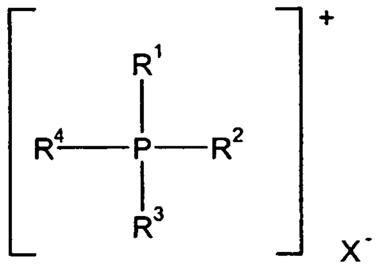

(7)

worin

$R^1$, $R^2$, $R^3$ und $R^4$ unabhängig voneinander die gleichen oder verschiedene $C_1$ bis $C_{18}$-Alkylene, $C_6$ bis $C_{10}$-Aryle oder $C_5$ bis $C_6$-Cycloalkyle bezeichnen können und

X- für ein Anion stehen kann, bei dem das entsprechende Säure-Base-Paar $H^+ + X^- \leftrightarrow HX$ ein $pK_b$ von < 11 hat.

Bevorzugte Katalysatoren sind Tetraphenylphosphoniumfluorid, Tetraphenylphosphoniumtetraphenylborat und Tetraphenylphosphoniumphenolat. Am meisten bevorzugt ist Tetraphenylphosphoniumphenolat. Bevorzugte Mengen an Phosphoniumsalzkatalysatoren sind beispielsweise $10^{-2}$ bis $10^{-8}$ Mol pro Mol Diphenol und die am meisten bevorzugten Katalysatormengen sind $10^{-4}$ bis $10^{-6}$ Mol pro Mol Diphenol. Weitere Cokatalysatoren können gegebenenfalls zusätzlich zu dem Phosphoniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können beispielsweise im Bereich von 1 bis 200 ppb, vorzugsweise 5 bis 150 ppb und am meisten bevorzugt 10 bis 125 ppb liegen, jeweils berechnet als Natrium.

Die Polycarbonate können unter Reaktionsbedingungen hergestellt werden, die in Stufen mit Temperaturen von 150 bis 400°C durchgeführt werden, die Verweilzeit in jeder Stufe kann 15 Minuten bis 5 Stunden betragen, und die Drücke betragen 1000 bis 0,01 mbar.

Die erfindungsgemäßen Zusammensetzungen können neben den Polycarbonaten oder Polyestercarbonaten weitere polymere Bestandteile und übliche Additive enthalten. Mögliche polymere Bestandteile sind beispielsweise Styrol/Acrylnitril-Terpolymere (SAN), Acrylnitril/Butadien/Styrol-Terpolymere (ABS), Polymethylmethacrylat (PMMA), fluorierte Polyolefine (PTFE), Polyphenylensulfid (PPS), Polyolefine wie Polyethylen, Polypropylen und Ethylen/Propylen-Kautschuke, Epoxyharze, Polyester wie Polybutylenterephthalat (PBT), Polyethylenterephthalat (PET), Polycyclohexendimethanol (PCT), Copolyester von Ethylenglycol und Cyclohexendimethanolterephthalsäure im Verhältnis der beiden Bestandteile von 1 : 4 (PCTG), Copolyester von Ethylenglycol und Cyclohexendimethanolterephthalsäure im Verhältnis der beiden Bestandteile von 4 : 1 (PETG) sowie andere nach dem Grenzflächenverfahren erzeugte Polycarbonate sowie Mischungen der zuvor genannten Komponenten. Weitere Additive sind Entformungsmittel, Stabilisatoren, Antioxidantien, Flammschutzmittel, Farbstoffe und Pigmente, Antistatika, Nukleiermittel, Antitropfinittel sowie organische und weitere anorganische Füll- und Verstärkungsstoffe.

Das erfindungsgemäße Polycarbonat kann in der erfindungsgemäßen Zusammensetzung in einer Menge von vorzugsweise 5 bis 95 Gew.-%, besonders bevorzugt 10 bis 90 Gew.-% und in am meisten bevorzugter Weise 20 bis 80 Gew.-%, bezogen auf die Masse der Zusammensetzung, enthalten sein. Die weiteren polymeren Bestandteile der erfindungsgemäßen Zusammensetzung können in einer Menge von vorzugsweise 1 bis 60 Gew.-%, besonders bevorzugt 1 bis 40 Gew.-% und in am meisten bevorzugter Weise 2 bis 30 Gew.-%, bezogen auf die Masse der Zusammensetzung, enthalten sein.

Die Zusammensetzungen können bis zu 60, vorzugsweise 10 bis 40 Gew.-%, bezogen auf die gefüllte oder verstärkte Formmasse, anorganische Materialien wie Füll- und/oder Verstärkungsstoffe enthalten. Flammschutzmittel können in der erfindungsgemäßen Zusammensetzung in einer Menge von bis zu 35 Gew.-%, vorzugsweise 10 bis 25 Gew.-%, bezogen auf die Masse der Zusammensetzung enthalten sein.

Diese und weitere in den erfindungsgemäßen Zusammensetzungen neben den Polycarbonaten/Polyestercarbonaten möglicherweise enthaltene Bestandteile oder Additive werden anschließend beispielhaft erläutert.

Diese Substanzen sind in vielen Veröffentlichungen zu finden wie etwa in Additives for Plastics Handbook, John Murphy, 1999 und im Handel erhältlich.

1. Geeignete Antioxidantien sind beispielsweise:

1.1. Alkylierte Monophenole, zum Beispiel 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(a-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, die in der Seitenkette linear oder verzweigt sind, zum Beispiel, 2,6-Di-nonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol.

1.2. Alkylthiomethylphenole, zum Beispiel 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.

1.3. Hydrochinone und alkylierte Hydrochinone, zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

1.4. Tocopherole, zum Beispiel α-Tocopherol, β-Tocopherol, γ-Tocopherol, δ-Tocopherol und Gemische davon (Vitamin E).

1.5. Hydroxylierte Thiodiphenylether, zum Beispiel 2,2'-Thiobis(6-tert-butyl-4-methylphenol), 2,2'-Thiobis(4-octylphenol), 4,4'-Thiobis(6-tert-butyl-3-methyl-phenol), 4,4'-Thiobis(6-tert-butyl-2-methylphenol), 4,4'-Thiobis (3,6-di-sec-amylphenol), 4,4'-Bis(2,6-dimethyl-4-hydroxyphenyl)disulfid.

1.6. Alkylidenbisphenole, zum Beispiel 2,2'-Methylenbis(6-tert-butyl-4-methylphenol), 2,2'-Methylenbis(6-tert-butyl-4-ethylphenol), 2,2'-Methylenbis[4-methyl-6-(α-methylcyclohexyl)phenol], 2,2'-Methylenbis(4-methyl-6-cyclohexylphe-nol), 2,2'-Methylenbis(6-nonyl-4-methylphenol), 2,2'-Methylenbis(4,6-di-tert-butyl-phenol), 2,2'-Ethylidenbis(4,6-di-tert-butylphenol), 2,2'-Ethylidenbis(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylmercaptobutan, Ethylenglycolbis[3,3-bis(3'-tert-butyl-4'-hydroxyphenyl)butyrat], Bis(3-tert-butyl-4-hydroxy-5-methyl-phenyl)-dicyclopentadien, Bis[2-(3'-tert-butyl-2'-hydroxy-5'-methylbenzyl)-6-tert-butyl-4-methylphenyl]terephthalat, 1,1-Bis(3,5-dimethyl-2-hydroxyphenyl)butan, 2,2-Bis(3,5-di-tert-butyl-4-hydroxyphenyl)propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)pentan.

1.7. O-, N- und S-Benzylverbindungen, zum Beispiel 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, Bis(4-tert-butyl-3-hydroxy-2,6-dimethylbenzyl)dithioterephthalat, Bis(3,5-di-tert-butyl-4-hydroxybenzyl)sulfid, Isooctyl-3,5-di-tert-butyl-4-hydroxybenzylmercaptoacetat.

1.8. Hydroxybenzylierte Malonate, zum Beispiel Dioctadecyl-2,2-bis(3,5-di-tert-butyl-2-hydroxybenzyl)malonat, Dioctadecyl-2-(3-tert-butyl-4-hydroxy-5-methylbenzyl)malonat, Didodecylmercaptoethyl-2,2-bis(3,5-di-tert-butyl-4-hydroxybenzyl) malonat, Bis[4-(1,1,3,3-tetramethylbutyl)phenyl]-2,2-bis(3,5-di-tert-butyl-4-hydroxybenzyl)malonat.

1.9. Aromatische Hydroxybenzylverbindungen, zum Beispiel 1,3,5-Tris-(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.

1.10. Triazinverbindungen, zum Beispiel 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris-(3,5-di-tert-butyl-4-hydroxybenzyl)isocyanurat, 1,3,5-Tris(4-tert-butyl-3-hydroxy-2,6-dimethylbenzyl) isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropioyl)hexahydro-1,3,5-triazin, 1,3,5-Tris(3,5-dicyclohexyl-4-hydroxybenzyl)isocyanurat.

1.11. Acylaminophenole, zum Beispiel 4-Hydroxylauranilid, 4-Hydroxytearanilid, Octyl-N-(3,5-di-tert-butyl-4-hydroxyphenyl)carbamat.

1.12. Ester von β-(3,5-Di-tert-butyl-4-hydroxyphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.13. Ester von β-(5-tert-Butyl-4-hydroxy-3-methylphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.14. Ester von β-(3,5-Dicyclohexyl-4-hydroxyphenyl)propionsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl) isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.15. Ester von 3,5-Di-tert-butyl-4-hydroxyphenylessigsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.16. Amide of β-(3,5-Di-tert-butyl-4-hydroxyphenyl)propionsäure, z.B. N,N'-Bis-(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl-4-hydroxyphenylpropionyl)hydrazid, N,N-Bis[2-(3-[3,5-di-tert-butyl-4-hydroxyphenyl]-propionyloxy)ethyl]oxamid (Naugard® XL-1 von Uniroyal).

1.17. Ascorbinsäure (Vitamin C)

1.18. Aminische Antioxidantien, zum Beispiel N,N'-Diisopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylen-diamin, N,N'-Bis(2-naphthyl)-p-phenylendiamin, N-Isopropyl-N'-phenyl-p-phenylen-diamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyl-diphenylamin, 4-n-Butylaminophenol, 4-Butyrylaminophenol, 4-Nonanoyl-aminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenyl-amino)propan, (o-Tolyl)biguanid, Bis[4-(1',3'-dimethylbutyl)phenyl]amin, tert-octyliertes N-Phenyl-1-naphthylamin, ein Gemisch von mono- und dialkylierten tert-Butyl/tert-Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropyl/Isohexyldiphenylaminen, ein Gemisch von mono- und dialkylierten tert-Butyldiphenylaminen, 2,3-Dihydro-3,3-dimethyl-4H-1,4-benzothiazin, Phenothiazin, ein Gemisch von mono- und dialkylierten tert-Butyl/tert-Octylphenothiazinen, ein Gemisch von mono- und dialkylierten tert-Octylphenothiazinen, N-Allylphenothiazin, N,N,N',N'-Tetraphenyl-1,4-diaminobut-2-en, N,N-bis(2,2,6,6-tetramethylpiperid-4-ylhexamethylendiamin, Bis(2,2,6,6-tetramethylpiperid-4-yl)sebacat, 2,2,6,6-Tetramethylpiperidin-4-on, 2,2,6,6-Tetra-methylpiperidin-4-ol. Es können einzelne dieser Verbindungen oder Gemische derselben eingesetzt werden.

1.19. Geeignete Thiosynergisten sind zum Beispiel Dilaurylthiodipropionat und/oder Distearylthiodipropionat.

2. UV-Absorber und Lichtstabilisatoren können in den erfindungsgemäßen Zusammensetzungen in Mengen von 0,1 bis 15 Gew.-%, vorzugsweise 3 bis 8 Gew.-%, bezogen auf die Masse der Zusammensetzung, eingesetzt werden. Geeignete UV-Absorber und Lichtstabilisatoren sind beispielsweise:

2.1. 2-(2'-Hydroxyphenyl)benzotriazole, um Beispiel 2-(2'-Hydroxy-5'-methylphenyl)benzotriazol, 2-(3',5'-Di-tert-butyl-2'-hydroxyphenyl)benzotriazol, 2-(5'-tert-Butyl-2'-hydroxyphenylbenzotriazol, 2-(2'-Hydroxy-5'-(1,1,3,3-tetramethylbutyl) phenyl)benzo-triazol, 2-(3',5'-Di-tert-butyl-2'-hydroxyphenyl)-5-chlorbenzo-triazol, 2-(3'-tert-Butyl-2'-hydroxy-5'-methylphenyl)-5-chlorbenzotriazol, 2-(3'-sec-Butyl-5'-tert-butyl-2'-hydroxyphenyl) benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)benzotriazol, 2-(3'-tert-Butyl-2'-hydroxy-5'-(2-octyl-oxycarbonyl-ethyl)phenyl)-5-chlorbenzotriazol, 2-(3'-tert-Butyl-5'-[2-(2-ethyl-hexyloxy)carbonyl-ethyl]-2'-hydroxyphenyl)-5-chlorbenzotriazol, 2-(3'-tert-Butyl-2'-hydroxy-5'-(2-meth-oxycarbonylethyl)phenyl)-5-chlorbenzotriazol, 2-(3'-tert-Butyl-2'-hydroxy-5'-(2-methoxycarbonylethyl)phenyl)benzotriazol, 2-(3'-tert-Butyl-2'-hydroxy-5'-(2-octyl-oxycarbonylethyl)phenyl)benzotriazol, 2-(3'-tert-Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3'-tert-Butyl-2'-hydroxy-5'-(2-isooctyl-oxy-carbonylethyl)phenylbenzotriazol, 2,2'-Methylenbis[4-(1,1,3,3-tetramethylbutyl)-6-benzotriazol-2-ylphenol]; das Umesterungsprodukt von 2-[3'-tert-Butyl-5'-(2-methoxycarbonylethyl)-2'-hydroxyphenyl]-2H-benzotriazol mit Polyethylenglycol 300; $[R-CH_2CH_2-COO-CH_2CH_2]_2$, wobei R = 3'-tert-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-Hydroxy-3'-(1,1,3,3-tetramethylbutyl)-5'-(α,α -dimethylbenzyl)phenyl]benzotriazol.

2.2. 2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und 2'-Hydroxy-4,4'-dimethoxy-Derivate.

2.3. Ester von substituierten und unsubstituierten Benzoesäuren, wie zum Beispiel 4-tert-Butylphenylsalicylat, Phenylsalicylat, Octylphenylsalicylat, Bibenzoylresorcin, Bis(4-tert-butylbenzoyl)resorcin, Benzoylresorcin, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.

2.4. Acrylate, zum Beispiel Ethyl-α-cyan-β,β-diphenylacrylat, Isooctyl-α-cyan-β,β-diphenylacrylat, Methyl-α-carbomemoxycinnamat, Methyl-α-cyan-β-methyl-p-methoxycinnamat, Butyl-α-cyan-β-methyl-p-methoxycinnamat, Methyl-α-carbomethoxyp-methoxycinnamat und N-(β-Carbomethoxy-β-cyanvinyl)-2-methylindolin.

2.5. Nickelverbindungen, zum Beispiel Nickelkomplexe von 2,2'-Thiobis[4-(1,1,3,3-tetramethylbutyl)phenol], wie der 1:1- oder 1:2-Komplex, mit oder ohne zusätzliche Liganden, wie n-Butylamin, Triethanolamin oder N-Cyclohexyldiethanolamin, Nickeldibutyldithiocarbamat, Nickelsalze der Monoalkylester, z.B. des Methyl- oder Ethylesters, von 4-Hydroxy-3,5-di-tert-butylbenzylphosphonsäure, Nickelkomplexe von Ketoximen, z.B. von 2-Hydroxy-4-methylphenylundecylketoxim, Nickelkomplexe von 1-Phenyl-4-lauroyl-5-hydroxypyrazol, mit oder ohne zusätzliche Liganden.

2.6. Sterisch gehinderte Amine, zum Beispiel Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)sebacat, Bis(1-octyloxy-2,2,6,6-tetramethyl-4-piperidyl)sebacat, Bis-(1,2,2,6,6-pentamethyl-4-piperidyl), n-Butyl-3,5-di-tert-butyl-4-hydroxy-benzylmalonat, das Kondensat von 1-(2-Hydroxyethyl)-2,2,6,6-tetramethyl-4-hydroxypiperidin und Bernsteinsäure, lineare oder cyclische Kondensate von N,N'-Bis-(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)nitrilotriacetat, Tetrakis-(2,2,6,6-tetramethyl-4-piperidyl)-1,2,3,4-butantetracarboxylat, 1,1'-(1,2-Ethandiyl) bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethyl-piperidyl) sebacat, Bis(1-octyloxy-2,2,6,6-tetramethylpiperidyl)succinat, lineare oder cyclische Kondensate von N,N'-Bis(2,2,6,6-tetramethyl-4-piperidyl)hexamethylendiamin und 4-Morpholino-2,6-dichlor-1,3,5-triazin, das Kondensat von 2-Chlor-4,6-bis(4-n-butylamino-2,2,6,6-tetramethylpiperidyl)-1,3,5-triazin und 1,2-Bis(3-aminopropylamino)ethan, das Kondensat von 2-Chlor-4,6-bis(4-n-butylamino-1,2,2,6,6-pentamethylpiperidyl)-1,3,5-triazin und 1,2-Bis(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, ein Gemisch von 4-Hexadecyloxy- und 4-Stearyloxy-2,2,6,6-tetramethylpiperidin, ein Kondensationsprodukt von N,N'-Bis-(2,2,6,6-tetramethyl-4-piperidyl)hexamethylendiamin und 4-Cyclohexylamino-2,6-dichloro-1,3,5-triazin, ein Kondensationsprodukt von 1,2-Bis(3-aminopropylamino)-ethan und 2,4,6-Trichlor-1,3,5-triazin sowie 4-Butylamino-2,2,6,6-tetramethylpiperidin (CAS Reg. No. [136504-96-6]); N-(2,2,6,6-Tetramethyl-4-piperidyl)-n-dodecyl-succinimid, N-(1,2,2,6,6-Pentamethyl-4-piperidyl)-n-dodecyl-succinimid, 2-Undecyl-7,7,9,9-tetramethyl-1-oxa-3,8-diaza-4-oxospiro[4.5]decan, ein Reaktionsprodukt von 7,7,9,9-Tetramethyl-2-cycloundecyl-1-oxa-3,8-diaza-4-oxospiro[4.5]decan und Epichlorhydrin, 1,1-Bis(1,2,2,6,6-pentamethyl-4-piperidyl-oxycarbonyl)-2-(4-methoxyphenyl)ethen, N,N'-Bis(formyl)-N,N'-bis(2,2,6,6-tetra-methyl-4-piperidyl)-hexamethylendiamin, Diester von 4-Methoxymethylenmalonsäure mit 1,2,2,6,6-Pentamethyl-4-hydroxypiperidin, Poly[methylpropyl-3-oxy-4-(2,2,6,6-tetramethyl-4-piperidyl)]siloxan, Reaktionsprodukt von Maleinsäureanhydrid-$\alpha$-Olefin-Copolymer mit 2,2,6,6-Tetramethyl-4-aminopiperidin oder 1,2,2,6,6-Pentamethyl-4-aminopiperidin.

2.7. Oxamide, zum Beispiel 4,4'-Dioctyloxyoxanilid, 2,2'-Diethoxyoxanilid, 2,2'-Di-octyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylarninopropyl) oxamid, 2-Ethoxy-5-tert-butyl-2'-ethoxanilid und dessen Gemisch mit 2-Ethoxy-2'-ethyl-5,4'-di-tert-butoxanilid, Gemische von o- und p-Methoxy-disubstituierten Oxaniliden und Gemische von o- und p-Ethoxy-disubstituierten Oxaniliden.

2.8. 2-(2-Hydroxyphenyl)-1,3,5-triazine, zum Beispiel 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis (2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

Es können einzelne dieser Verbindungen oder Gemische derselben eingesetzt werden.

3. Geeignete Metalldesaktivatoren sind zum Beispiel N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis-(benzyliden)oxalyldihydrazid, Oxanilid, Isophthaloyldihydrazid, Sebacoylbisphenylhydrazid, N,N'-Diacetyladipoyldihydrazid, N,N-Bis(salicyloyl)oxalyldihydrazid, N,N'-Bis(salicyloyl)thiopropionyldihydrazid. Es können einzelne dieser Verbindungen oder Gemische derselben eingesetzt werden.

5. Geeignete Peroxidfänger sind zum Beispiel Ester von $\beta$-Thiodipropionsäure, zum Beispiel der Lauryl-, Stearyl-, Myristyl- oder Tridecylester, Mercaptobenzimidazol oder das Zinksalz von 2-Mercaptobenzimidazol, Zinkdibutyldithiocarbamat, Dioctadecyldisulfid, Pentaerythrittetrakis(dodecylmercapto)propionat. Es können einzelne dieser Verbindungen oder Gemische derselben eingesetzt werden.

6. Geeignete basische Costabilisatoren sind zum Beispiel Melamin, Polyvinylpyrrolidon, Dicyandiamid, Triallylcyanurat, Harnstoffderivate, Hydrazinderivate, Amine, Polyamide, Polyurethane, Alkalimetallsalze und Erdalkalimetallsalze höherer Fettsäuren, zum Beispiel Calciumstearat, Zinkstearat, Magnesiumbehenat, Magnesiumstearat, Natriumricinoleat und Kaliumpalmitat, Antimonpyrocatecholat oder Zinkpyrocatecholat. Es können einzelne dieser Verbindungen oder Gemische derselben eingesetzt werden.

7. Geeignete Keimbildner sind zum Beispiel anorganische Substanzen, wie Talk, Metalloxide, wie Titandioxid oder Magnesiumoxid, Phosphate, Carbonate oder Sulfate, vorzugsweise von Erdalkalimetallen; organische Verbindungen, wie Mono- oder Polycarbonsäuren und deren Salze, z.B. 4-tert-Butylbenzoesäure, Adipinsäure, Diphenylessigsäure, Natriumsuccinat oder Natriumbenzoat; polymere Verbindungen, wie ionische Copolymere (Ionomere). Besonders bevorzugt sind 1,3:2,4-Bis(3',4'-dimethylbenzyliden)sorbit, 1,3:2,4-Di(paramethyldibenzyliden)sorbit und 1,3:2,4-Di-(benzyliden)sorbit. Es können einzelne dieser Verbindungen oder Gemische derselben eingesetzt werden.

8. Geeignete Füllstoffe und Verstärkungsmittel sind zum Beispiel Calciumcarbonat, Silicate, Glasfasern, Glasballons, Asbest, Talk, Kaolin, Glimmer, Bariumsulfat, Metalloxide und -hydroxide, Ruß, Graphit, Wollastonit, Holzmehl und Mehle oder Fasern anderer Naturprodukte, synthetische Fasern. Es können einzelne dieser Verbindungen oder Gemische derselben eingesetzt werden.

9. Geeignete andere Additive sind zum Beispiel Weichmacher, Gleitmittel, Emulgatoren, Pigmente, Viskositätsmodifikatoren, Katalysatoren, Verlaufmittel, optische Aufheller, Flammschutzmittel, antistatische Mittel und Treibmittel.

10. Geeignete Benzofuranone und Indolinone sind zum Beispiel diejenigen, die in U.S. 4,325,863; U.S. 4,338,244; U.S. 5,175,312; U.S. 5,216,052; U.S. 5,252,643; DE-A-43 16 611; DE-A-43 16 622; DE-A-43 16 876; EP-A-0 589 839 oder EP-A-0 591 102 offenbart sind, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]benzofuran-2-on, 3,3'-Bis[5,7-di-tert-butyl-3-(4-[2-hydroxyethoxy] phenyl)benzofuran-2-on], 5,7-Di-tert-butyl-3-(4-ethoxyphenyl)benzofuran-2-on, 3-(4-Acetoxy-3,5-dimethylphenyl)-5,7-di-tert-butylbenzofuran-2-on, 3-(3,5-Dimethyl-4-pivaloyloxyphenyl)-5,7-di-tert-butylbenzo-furan-2-on, 3-(3,4-Dimethylphenyl)-5,7-di-tert-butylbenzofuran-2-on, 3-(2,3-Dimethylphenyl)-5,7-di-tert-butylbenzofuran-2-on, Lacton-Antioxidantien wie

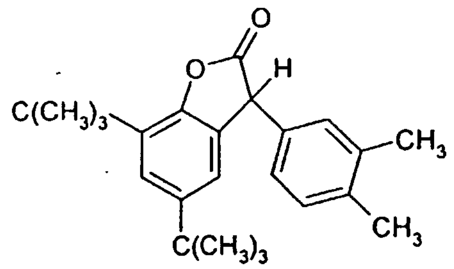

(8)

Diese Verbindungen wirken beispielsweise als Antioxidantien. Es können einzelne dieser Verbindungen oder Gemische derselben eingesetzt werden.

11. Geeignete fluoreszierende Weichmacher sind die in "Plastics Additives Handbook", Hrsg. R. Gächter und H. Müller, Hanser Verlag, 3. Aufl., 1990, Seite 775-789 aufgeführten.

12. Geeignete Formtrennmittel sind Ester von aliphatischen Säuren und Alkoholen, z.B. Pentaerythrittetrastearat und Glycerinmonostearat, sie werden allein oder im Gemisch vorzugsweise in einer Menge von 0,02 bis 1 Gew.-%, bezogen auf die Masse der Zusammensetzung eingesetzt.

13. Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie Salze, wie $C_4F_9SO_3^-Na^+$.

14. Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

15. Geeignete Polymere sind SAN, ABS, PMMA, PTFE, PSU, PPS, Polyolefine, wie Polyethylen, Polypropylen und Ethylen-Propylen-Kautschuke, Epoxyharze, Polyester, wie PBT, PET, PCT, PCTG und PETG sowie andere im Grenzflächenverfahren erzeugte Polycarbonate.

16. Geeignete antistatische Mittel sind Sulfonatsalze beispielsweise Tetraethylammoniumsalze von $C_{12}H_{25}SO^{3-}$ oder $C_8F_{17}SO^{3-}$.

17. Geeignete Färbemittel sind Pigmente sowie organische und anorganische Farbstoffe.

18. Verbindungen, die Epoxygruppen enthalten, wie 3,4-Epoxycyclohexylmethyl-3,4-epoxycyclohexylcarboxylat, Copolymere von Glycidylmethacrylat und Epoxysilane.

19. Verbindungen, die Anhydridgruppen, wie Maleinsäureanhydrid, Bemsteinsäureanhydrid, Benzoesäureanhydrid und Phthalsäureanhydrid.

Die Verbindungen der Gruppen 18 und 19 wirken als Schmelzestabilisatoren. Sie können einzeln oder in Gemischen eingesetzt werden.

Die erfindungsgemäßen Zusammensetzungen (Formmassen) werden hergestellt, indem man die jeweiligen Bestandteile in bekannter Weise vermischt und bei Temperaturen von etwa 300°C und beispielsweise bei Temperaturen von 200°C bis 400°C in üblichen Aggregaten wie Innenknetern, Extrudern und Doppelwellenschnecken schmelzcompoundiert und schmelzextrudiert. Die Vermischung der einzelnen Bestandteile kann sowohl sukzessive als auch simultan erfolgen und zwar sowohl bei etwa 20°C (Raumtemperatur) als auch bei höherer Temperatur.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele der erfindungsgemäßen Formkörper sind Profile, Folien, Gehäuseteile jeder Art, z.B. für Haushaltsgeräte wie Saftpressen, Kaffeemaschinen, Mixer; für Büromaschinen wie Monitore, Drucker, Kopierer; für Platten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenaus- und Bauteile von Schienenfahrzeugen, Schiffen, Flugzeugen, Bussen und anderen Kraftfahrzeugen sowie für Kfz-Karosserieteile verwendet werden.

Die erfindungsgemäßen Formkörper können transparent oder undurchsichtig sein. Weitere Formkörper sind insbesondere optische und magnetooptische Datenspeicher wie Mini Disk, Compact Disk (CD) oder Digital Versatile Disk (DVD), Lebensmittel- und Getränkeverpackungen, optische Linsen und Prismen, Linsen für Beleuchtungszwecke, Autoscheinwerferlinsen, Verglasungen für Bau- und Kraftfahrzeuge, Verscheibungen anderer Art wie für Gewächshäuser, sogenannte Stegdoppelplatten oder Hohlkammerplatten.

Die folgenden Beispiele dienen der weiteren Erläuterung der Erfindung.

**Beispiele**

Auf der Basis von zwei Schmelzepolycarbonaten und einem nach dem Grenzflächenverfahren erhaltenen linearen Polycarbonat wurden Polycarbonat-Zusammensetzungen hergestellt. Sieben erfindungsgemäß zu verwendende Phosphorverbindungen wurden mit den Polycarbonaten mittels eines ZSK33-Doppelschneckenextruders extrusionscompoundiert. Dadurch wird ein direkter Vergleich der Auswirkungen der Zugabe der Phosphorverbindung zu den unterschiedlichen Polycarbonaten möglich.

Die Hydrolysestabilität wurde ermittelt, indem man die Polycarbonat-Zusammensetzung gemäß ASTM-Verfahren D1238 bei 300°C in einem Zwick Melt Indexer hielt. Die Stranggranulatzusammensetzungen wurden zuerst in Luft bis zu einem Wassergehalt von 0,12 % konditioniert und dann der Schmelzflussindextest durchgeführt. Das Molekulargewicht der extrudierten Zusammensetzung und das Molekulargewicht der Zusammensetzung nach dem Stabilitätstest wurden anhand einer Korrelation mit Messungen der relativen Viskosität bestimmt. Die Reduktion des Molekulargewichts wurde durch Differenzbildung berechnet. Die relative Viskosität wurde bei 20°C in einer 0,5 %igen Lösung in Methylenchlorid gemessen.

Der Yellownessindex wurde an spritzgegossenen Proben in einer Dicke von 4 mm nach CIELAB-Methode bestimmt.

Die Wassermenge im Polycarbonat wurde nach dem Karl-Fischer-Titrationsverfahren ermittelt.

Tabelle 1

| Beispiel | | 1 | 2 | 3 | 4 | 5 | 6 | 7 | 8 |
|---|---|---|---|---|---|---|---|---|---|
| PC1 | % | 100,00 | 99,97 | 99,99 | 99,9 | | | | |
| PC2 | % | | | | | 100,00 | 99,97 | 99,99 | 99,9 |
| Phosphorverbindung 1 | % | | 0,03 | | | | 0,03 | | |
| Phosphorverbindung 2 | % | | | 0,01 | | | | 0,01 | |
| Phosphorverbindung 3 | % | | | | 0,1 | | | | 0,1 |
| $M_w$ | | 28.949 | 28.561 | 28.432 | 28.561 | 28.820 | 28.561 | 28.561 | 28.561 |

(fortgesetzt)

| Beispiel | | 1 | 2 | 3 | 4 | 5 | 6 | 7 | 8 |
|---|---|---|---|---|---|---|---|---|---|
| $M_w$ nach Hydrolysestabilitätstest mit 0,12 % Feuchtigkeit | | 25.584 | 25.713 | 27.525 | 26.619 | 28.043 | 26.360 | 26.888 | 26.360 |
| Reduktion von $M_w$ | | 3.366 | 2.848 | 906 | 1.942 | 777 | 2.201 | 1.673 | 2,201 |
| YI | | 3,5 | 2,7 | 2,6 | 3,5 | 3,5 | 2,6 | 1,7 | 3,5 |

Erläuterung zur Tabelle 1:
PC1 ist durch Schmelzpolymerisation hergestelltes Bisphenol-A-polycarbonat mit 256 ppm Verbindung A, 21 ppm Verbindung B,
59 ppm Verbindung C und 175 ppm Verbindung D.
PC2 ist durch das Grenzflächenverfahren hergestelltes Bisphenol-A-polycarbonat mit < 5 ppm Verbindung A, B, C und D.
Phosphorverbindung 1 ist Tris[(3-ethyloxetanyl-3)methyl]phosphit.
Phosphorverbindung 2 ist Tris(2-ethylhexyl)phosphat.
Phosphorverbindung 3 ist Triphenylphosphin.

In Tabelle 2 sind weitere Beispiele für verschiedene Phosphorverbindungen mit unterschiedlichen Oxidationsstufen für Phosphor angegeben.

Tabelle 2

| Beispiel | | 9 | 10 | 11 | 14 | 15 | 16 | 17 |
|---|---|---|---|---|---|---|---|---|
| PC3 | % | 100,00 | 99,95 | 99,95 | 99,95 | 99,95 | 99,95 | 99,95 |
| Phosphorverbindung 4 | % | | 0,05 | | | | | |
| Phosphorverbindung 1 | % | | | 0,05 | | | | |
| Phosphorverbindung 5 | % | | | | 0,05 | | | |
| Phosphorverbindung 6 | % | | | | | 0,05 | | |
| Phosphorverbindung 7 | % | | | | | | 0,05 | |
| Phosphorverbindungsgemisch 8 | % | | | | | | | 0,05 |
| $M_w$ | | 27.266 | 27.914 | 27.266 | 28.043 | 27.914 | 28.043 | 28.043 |
| $M_w$ nach Hydrolysestabilitätstest mit 0,12 % | | 25.066 | 27.266 | 25.584 | 27.137 | 25.842 | 26.878 | 26.490 |
| Reduktion von $M_w$ | | 2.201 | 647 | 1.683 | 906 | 2.071 | 1.165 | 1.554 |
| YI | | 4,3 | 4,2 | 3,6 | 3,3 | 3,2 | 3,3 | 3,0 |

**Erläuterung zu Tabelle 2:**
PC3 ist durch Schmelzpolymerisation hergestelltes Bisphenol-A-polycarbonat mit 231 ppm Verbindung A, 10 ppm Verbindung B, 53 ppm Verbindung C und 144 ppm Verbindung D.
Phosphorverbindung 4 ist Tris(2,4-di-tert.-butylphenyl)phosphit.
Phosphorverbindung 5 ist 2,4,6-Tri-tert.-butylphenyl-3-butyl-2-ethyl-1,3-propandiolphosphit.
Phosphorverbindung 6 ist Bis(2,4-dicumylphenyl)pentaerythritdiphosphit.
Phosphorverbindung 7 ist Tetrakis(2,4-di-tert.-butylphenyl)[1,1-biphenyl]-4,4'-diylbisphosphonit.
Phosphorverbindungsgemisch 8 ist 57 % Tris(2,4-di-tert.-butylphenyl)phosphit, 28 % Octadecyl-3-(3,5-di-tert.-butyl-4-hydroxyphenyl)propionat und 15 % der Verbindung in Formel (8).

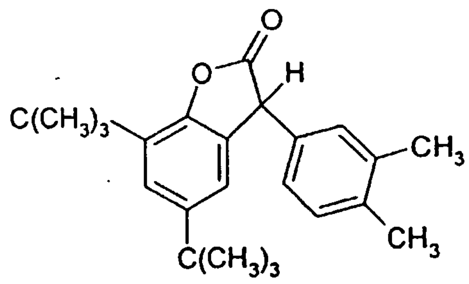

(8)

Die Ergebnisse zeigen, dass der Verlust des Molekulargewichts durch die Zugabe von Phosphorverbindungen zu dem schmelzpolymerisierten Polycarbonat reduziert wird. Dies ist die gegenteilige Wirkung, die man bei üblichen, nach dem Grenzflächenverfahren erzeugten Polycarbonaten beobachtet. Es ist davon auszugehen, dass die Hydrolysestabilität des schmelzpolymerisierten Polycarbonats durch die Zugabe einer Phosphorverbindung verbessert wird, während die Hydrolysestabilität des durch Grenzflächenpolymerisation erzeugten Polycarbonats abnimmt.

**Patentansprüche**

1. Zusammensetzung, enthaltend ein Schmelzepolycarbonat der Formel (1)

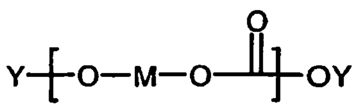

(1)

wobei die eckige Klammer sich wiederholende Struktureinheiten bezeichnet,

M Ar oder eine multifunktionelle Verbindung A, B, C sowie Verbindung D ist,

wobei Ar eine Verbindung sein kann, die durch Formel (2) dargestellt wird,

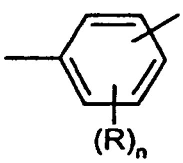

(2)

oder besonders bevorzugt eine Verbindung, die durch Formel (3) dargestellt wird,

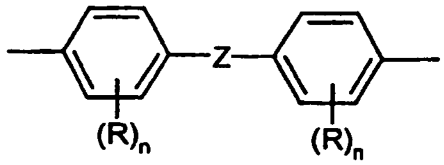

(3)

wobei

Z $C_1$ bis $C_8$-Alkyliden oder $C_5$ bis $C_{12}$-Cycloalkyliden, S, $SO_2$ oder eine Einfachbindung,
R ein substituiertes oder unsubstituiertes Phenyl, Methyl, Propyl, Ethyl, Butyl, Cl oder Br ist und n für 0, 1 oder

2 steht,

wobei die multifimktionelle Verbindung A eine Verbindung der Formel

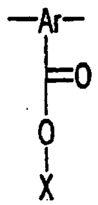

(A)

ist,
wobei die multifunktionelle Verbindung B eine Verbindung der Formel

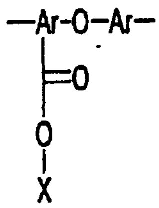

(B)

ist,
wobei die multifunktionelle Verbindung C eine Verbindung der Formel

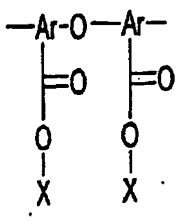

(C)

ist,
wobei Verbindung D eine Verbindung der Formel

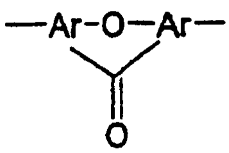

(D)

ist, und die Summe von multifunktionellen Verbindungen A, B, C und D > 5 ppm ist,
wobei Y = H oder eine Verbindung der Formel (4)

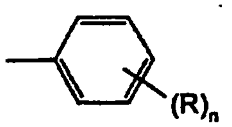

(4)

ist, wobei

R H, $C_1$ bis $C_{20}$-Alkyl, $C_6H_5$ oder $C(CH_3)_2C_6H_5$, gleich oder verschieden und
n 0, 1, 2 oder 3 sein kann,

wobei X = Y oder -(MOCOO)Y ist,
wobei

M und Y die oben angegebene Bedeutung haben,

und eine Phosphor enthaltende organische Verbindung.

**2.** Zusammensetzung nach Anspruch 1, worin die Phosphor (P) enthaltende organische Verbindung ein Phosphin ($PR_3$), Phosphinoxid ($OPR_3$), Phosphinit ($P(OR)R_2$), Phosphonit ($P(OR)_2R$), Phosphit ($P(OR)_3$), Phosphinat ($PO(OR)R_2$), Phosphonat ($PO(OR)_2R$), und/oder Phosphat ($PO(OR)_3$) ist und R Wasserstoff, ein $C_1$ bis $C_{100}$-Alkylrest oder ein nicht substituierter oder substituierter $C_6$ bis $C_{14}$-Arylrest. Der Rest R kann gleich oder verschieden sein.

**3.** Zusammensetzung nach Anspruch 1, worin die Phosphor (P) enthaltende organische Verbindung ein Diphosphin ($R_2P$-X-$PR_2$), Diphosphinit ((RO)RP-X-PR(OR)), Diphosphonit ($(RO)_2P$-X-$P(OR)_2$), Diphosphit ($(RO)_2P$-OXO-$P(OR)_2$), Diphosphinat, Diphosphonat, Diphosphatverbindung oder eine Verbindung der Formel $(RO)_mR_{2-m}P$-XP$(OR)_mR_{2-m}$ ist und R ein $C_1$ bis $C_{100}$-Alkylrest, oder ein nicht substituierter oder substituierter $C_6$ bis $C_{14}$-Arylrest ist, n 0, 1, 2 oder 3, m 0, 1 oder 2 bedeutet und X eine Verbindung der Formel (2)

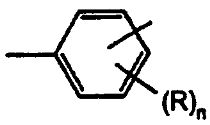

(2)

oder Formel (3)

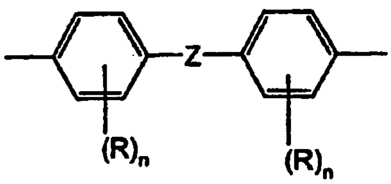

(3)

wobei R ein substituiertes oder unsubstituiertes Phenyl, Methyl, Propyl, Ethyl, Butyl, Cl oder Br ist und n für 0, 1 oder 2 steht,
und Z $C_1$ bis $C_8$-Alkyliden oder $C_5$ bis $C_{12}$-Cycloalkyliden, S, $SO_2$ oder eine Einfachbindung ist.

**4.** Zusammensetzung nach Anspruch 1, worin die organische Phosphor (P) enthaltende Verbindung eine Verbindung der Formel

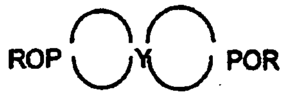

ist und R die in den Ansprüchen 2 und 3 angegebene Bedeutung hat, und Y für einen vierwertigen C1 bis C100 Alkoxyrest steht.

**5.** Zusammensetzung nach einem der Ansprüche 1 bis 4, worin die Phosphorverbindung in einer Menge von 10 ppm bis 30. Gew.-%, bezogen auf die Masse des Schmelzepolymers, enthalten ist.

**6.** Zusammensetzung nach einem der Ansprüche 1 bis 5, worin die Phosphorverbindung eine Verbindung der Formel

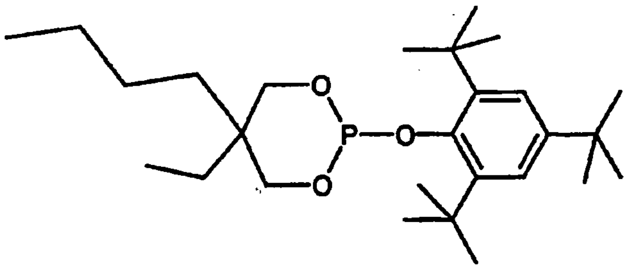

ist.

**7.** Zusammensetzung nach einem der Ansprüche 1 bis 5, worin die Phosphorverbindung eine Verbindung der Formel

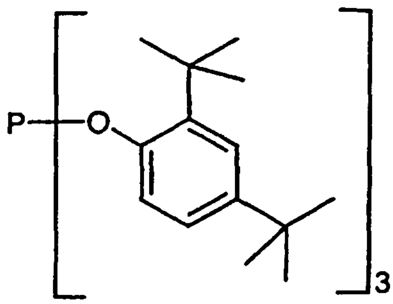

ist.

**8.** Zusammensetzung nach einem der Ansprüche 1 bis 5, worin die Phosphorverbindung Triphenylphosphat ist.

**9.** Formkörper, enthaltend eine Zusammensetzung nach einem der Ansprüche 1 bis 5.

**10.** Verwendung einer Phosphor enthaltenden Verbindung zur Erhöhung der Hydrolysestabilität von Schmelzepolycarbonaten gemäß Anspruch 1 und diese enthaltenden Formkörpern.

**11.** Verwendung nach Anspruch 10, worin die Phosphor enthaltende Verbindung eine der in Anspruch 2, 3 oder 4 genannten Verbindungen ist.

**12.** Verwendung nach Anspruch 10 oder 11, worin die Menge der Phosphor enthaltenden Verbindung 10 ppm bis 2 Gew.-%, bezogen auf die Masse des Schmelzepolycarbonats beträgt.

**13.** Verwendung nach Anspruch 10, worin die Menge der Phosphor enthaltenden Verbindung 10 ppm bis 1 Gew.-%, bezogen auf die Masse des Schmelzepolycarbonats beträgt.

## Claims

1. A composition containing a melt polycarbonate of the formula (1)

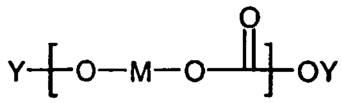

(1)

wherein the square brackets denote repeating structural units,

M is Ar or a multifunctional group A, B, C or group D,

wherein Ar may be a group which is represented by the formula (2)

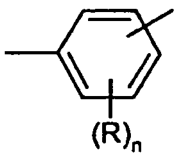

(2)

or particularly preferably by a group which is represented by the formula (3)

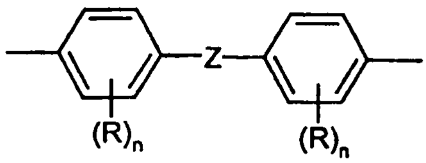

(3)

wherein

Z represents a $C_1$ to $C_8$ alkylidene or $C_5$ to $C_{12}$ cycloalkylidene group, S, $SO_2$ or a single bond,
R represents a substituted or unsubstituted phenyl, methyl, propyl, ethyl, butyl group, Cl or Br and n is 0, 1 or 2,

wherein the multifunctional group A is a group of the formula

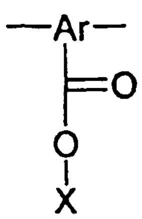

(A)

,

wherein the multifunctional group B is a group of the formula

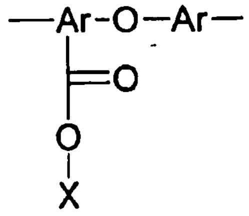

(B)

,

wherein the multifunctional group C is a group of the formula

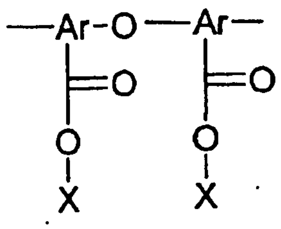

(C)

,

wherein group D is a group of the formula

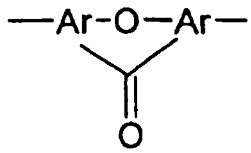

(D)

and the sum of multifunctional groups A, B, C and D is >5 ppm,
wherein Y = H or a group of the formula (4)

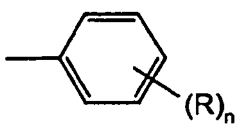

(4)

,

wherein

R identically or differently, represents H, $C_1$ to $C_{20}$ alkyl, $C_6H_5$ or $C(CH_3)_2C_6H_5$ and
n may be 0, 1, 2 or 3,

wherein X = Y or -(MOCOO)Y,
wherein

M and Y are defined in the same way as above,

and a phosphorus-containing organic compound.

2. A composition according to Claim 1, in which the phosphorus (P)-containing organic compound is a phosphine ($PR_3$), phosphine oxide ($OPR_3$), phosphinite ($P(OR)R_2$), phosphonite ($P(OR)_2R$), phosphite ($P(OR)_3$), phosphinate ($PO(OR)R_2$), phosphonate ($PO(OR)_2R$) and/or phosphate ($PO(OR)_3$) and R may be hydrogen, a $C_1$ to $C_{100}$ alkyl group or a non-substituted or substituted $C_6$ to $C_{14}$ aryl group: the groups R may be identical or different.

3. A composition according to Claim 1 in which the phosphorus (P)-containing organic compound is a diphosphine ($R_2P$-X-$PR_2$), diphosphinite ((RO)RP-X-PR(OR)), diphosphonite ($(RO)_2P$-X-$P(OR)_2$), diphosphite ($(RO)_2$-P-OXO-$P(OR)_2$), diphosphinate, diphosphonate, diphosphate compound or a compound of the formula $(RO)_mR_{2-m}P$-XP$(OR)_mR_{2-m}$ and R is a $C_1$ to $C_{100}$ alkyl group or a non-substituted or substituted $C_6$ to $C_{14}$ aryl group, n is 0, 1, 2 or 3, m is 0, 1 or 2 and X is a group of the formula (2)

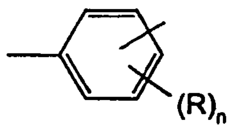

(2)

or of the formula (3)

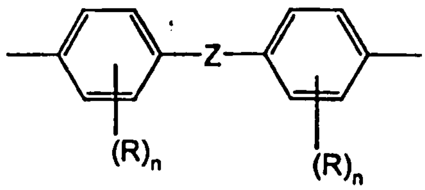

(3)

wherein R represents a substituted or unsubstituted phenyl, methyl, propyl, ethyl, butyl group, Cl or Br and n is 0, 1 or 2, and Z is a $C_1$ to $C_8$ alkylidene or $C_5$ to $C_{12}$ cycloalkylidene group, S, $SO_2$ or a single bond.

4. A composition according to Claim 1, in which the organic phosphorus (P)-containing compound is a compound of the formula

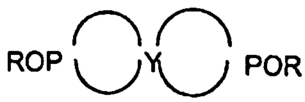

and R is defined in the same way as in Claims 2 and 3 and Y represents a tetravalent $C_1$ to $C_{100}$ alkoxy group.

5. A composition according to one of Claims 1 to 4, in which the phosphorus compound is present in an amount of 10 ppm to 30 wt.%, with respect to the weight of the melt polymer.

6. A composition according to one of Claims 1 to 5, in which the phosphorus compound is a compound of the formula

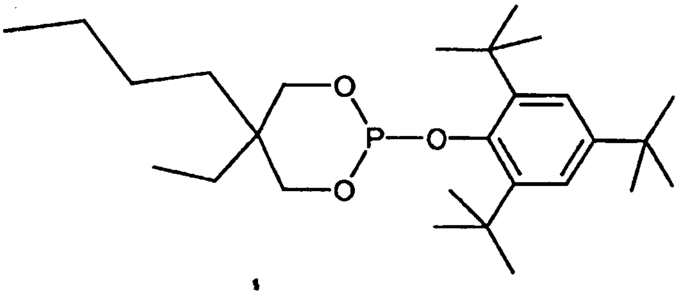

7. A composition according to one of Claims 1 to 5, in which the phosphorus compound is a compound of the formula

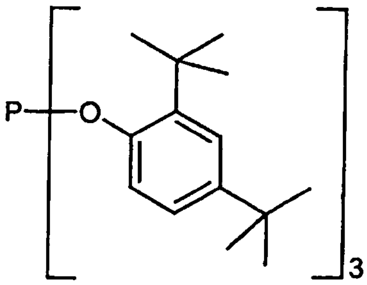

8. A composition according to one of Claims 1 to 5, in which the phosphorus compound is triphenylphosphate.

9. Moulded items containing a composition according to one of Claims 1 to 5.

10. Use of a phosphorus-containing compound to increase the resistance to hydrolysis of melt polycarbonates according to Claim 1 and moulded items containing these.

11. Use according to Claim 10, in which the phosphorus-containing compound is one of the compounds mentioned in Claim 2, 3 or 4.

12. Use according to Claim 10 or 11, in which the amount of phosphorus-containing compound is 10 ppm to 2 wt.%, with respect to the weight of the melt polycarbonate.

13. Use according to Claim 10, in which the amount of phosphorus-containing compound is 10 ppm to 1 wt.%, with respect to the weight of the melt polycarbonate.

## Revendications

1. Composition, contenant un polycarbonate fusible de formule (1) :

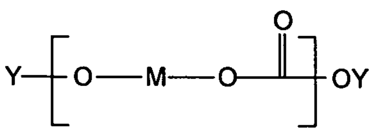

(1)

où les crochets caractérisent des unités structurales récurrentes,
M est Ar ou un composé multifonctionnel A, B, C ainsi qu'un composé D,

où Ar peut être un composé, qui est représenté par la formule (2) :

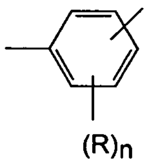

(2)

ou de manière particulièrement préférée, un composé, qui est représenté par la formule (3) :

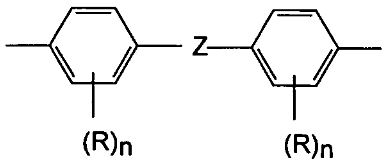

(3)

où
Z représente un radical alcoylidène en $C_1$ à $C_8$ ou cycloalcoylidène en $C_5$ à $C_{12}$, S, $SO_2$ ou une simple liaison,
R est un radical phényle substitué ou non substitué, méthyle, propyle, éthyle, butyle, Cl ou Br, et n représente 0, 1 ou 2,
où le composé multifonctionnel A est un composé de la formule :

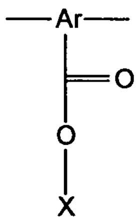

(A)

où le composé multifonctionnel B est un composé de la formule :

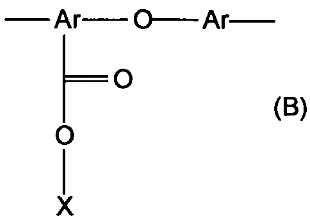

(B)

où le composé multifonctionnel C est un composé de la formule :

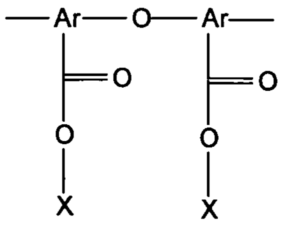

(C)

où le composé D est un composé de la formule :

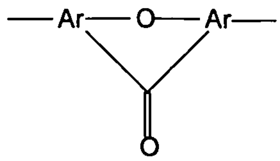

(D)

et la somme des composés multifonctionnels A, B, C et D est > 5 ppm,
où Y = H ou un composé de la formule (4) :

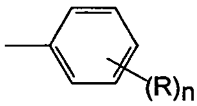

(4)

où
R est H, un radical alcoyle en $C_1$ à $C_{20}$, $C_6H_5$ ou $C(CH_3)_2C_6H_5$, identique ou différent, et
n peut être 0, 1, 2, ou 3,
où X = Y ou (MOCOO)Y,
où
M et Y ont la signification donnée ci-dessus, et un composé organique contenant du phosphore.

**2.** Composition selon la revendication 1, où le composé organique contenant du phosphore (P) est une phosphine ($PR_3$), un oxyde de phosphine ($OPR_3$),un phosphinite ($P(OR)R_2$), un phosphonite ($P(OR)_2R$), un phosphite ($P(OR)_3$), un phosphinate ($PO(OR)R_2$), un phosphonate ($PO(OR)_2R$) et/ou un phosphate ($PO(OR)_3$), et R est l'atome d'hydrogène, un reste alcoyle en $C_1$ à $C_{100}$
ou un reste aryle en $C_6$ à $C_{14}$, substitué ou non substitué, le reste R pouvant être identique ou différent.

**3.** Composition selon la revendication 1, où le composé organique contenant du phosphore (P) est une diphosphine ($R_2P$-X-$PR_2$), un diphosphinite ((RO)RP-X-PR(OR)), un diphosphonite ($(RO)_2P$-X-$P(OR)_2$), un diphosphite ($(RO)_2P$-OXO-$P(OR)_2$), un diphosphinate, un diphosphonate, un composé diphosphate ou un composé de la formule $(RO)_mR_{2-m}P$-$XP(OR)_mR_{2-m}$, et R est un reste alcoyle en $C_1$ à $C_{100}$ ou un reste aryle en $C_6$ à $C_{14}$, substitué ou non substitué, n est 0, 1, 2 ou 3, m représente 0, 1 ou 2 et X est un composé de la formule (2) :

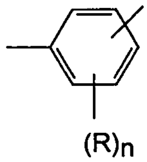

(2)

ou de la formule (3) :

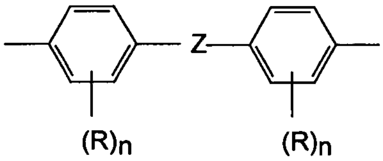

(3)

où
R est un radical phényle substitué ou non substitué, méthyle, propyle, éthyle, butyle, Cl ou Br, et n représente 0, 1 ou 2,
Z représente un radical alcoylidène en $C_1$ à $C_8$ ou cycloalcoylidène en $C_5$ à $C_{12}$, S, $SO_2$ ou une simple liaison.

4. Composition selon la revendication 1, où le composé organique contenant du phosphore (P) est un composé de la formule :

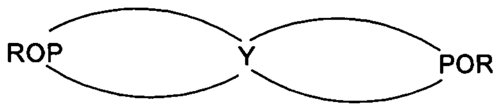

et R a la signification donnée aux revendications 2 et 3, et Y représente un reste alcoxy tétravalent en $C_1$ à $C_{100}$.

5. Composition selon l'une des revendications 1 à 4, où le composé du phosphore est présent en une quantité allant de 10 ppm à 30% en poids, sur base de la masse de polymère fusible.

6. Composition selon l'une des revendications 1 à 5, où le composé du phosphore est un composé de la formule :

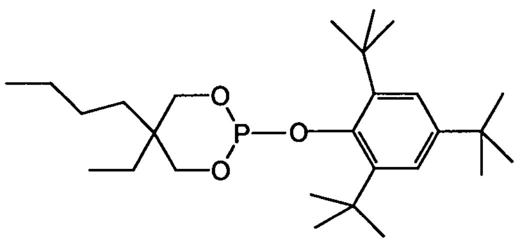

7. Composition selon l'une des revendications 1 à 5, où le composé du phosphore est un composé de la formule :

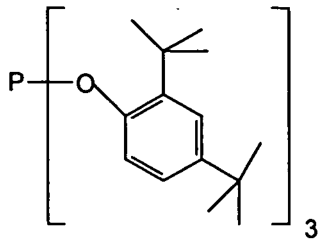

**8.** Composition selon l'une des revendications 1 à 5, où le composé du phosphore est le phosphate de triphényle.

**9.** Corps moulé, contenant une composition selon l'une des revendications 1 à 5.

**10.** Utilisation d'un composé contenant du phosphore pour augmenter la stabilité à l'hydrolyse de polycarbonates fusibles selon la revendication 1 et les corps moulés contenant ceux-ci.

**11.** Utilisation selon la revendication 10, où le composé contenant du phosphore est un des composés cités aux revendications 2, 3 ou 4.

**12.** Utilisation selon la revendication 10 ou 11, où la quantité de composé contenant du phosphore se situe dans l'intervalle allant de 10 ppm à 2% en poids, sur base de la masse de polycarbonate fusible.

**13.** Utilisation selon la revendication 10, où la quantité de composé contenant du phosphore se situe dans l'intervalle allant de 10 ppm à 1% en poids, sur base de la masse de polycarbonate fusible.